# EUROPEAN PATENT APPLICATION

(11) **EP 1 700 886 A1**
(43) Date of publication of application: **13.09.2006**
(21) Application number: 06110813.0
(22) Date of filing: 08.03.2006
(51) Int. Cl.: C08L 21/00, C08L 51/04

(54) **Blends of diene rubber with thermoplastic copolymer modified with nitrile rubber**

(30) Priority: 08.03.2005 US 73760
(71) Applicant: ZEON CHEMICALS L.P., Louisville KY 40233 (US)
(72) Inventor: Gozdiff, Michael, North Canton OH 44720 (US); Gettelfinger, Thomas, Jeffersonville IN 47130 (US)
(74) Representative: Portal, Gérard

(57) **Abstract**

A vulcanizable rubber composition comprising: (A) a diene-containing rubber; (B) a nitrile rubber modified-thermoplastic copolymer of an olefinically unsaturated nitrile and an ester of an olefinically unsaturated carboxylic acid; and (C) a vulcanizing system, wherein the amount of (B) is in the range from 3 to 100, preferably from 5 to 75, and more preferably from 15 to 50, parts solid weight per 100 parts solid weight of (A). The composition retains the desirable low temperature performance of the diene-containing rubber, but has better processability (as measured by mill release, die swell, green strength, etc.) than the diene-containining rubber, as well as improved resistance to attack by organic chemicals, and improved permeation resistance to organic fumes and fluids.

## Description

### FIELD OF THE INVENTION

The present invention relates to diene-based elastomeric copolymers that are modified with a thermoplastic copolymer, in which the thermoplastic copolymer itself has been modified with a nitrile rubber. More specifically, the invention relates to blends of diene-based elastomeric copolymers with a thermoplastic copolymer of a nitrile and an ester of a carboxylic acid, in which the thermoplastic copolymer itself has been modified with a nitrile rubber.

### BACKGROUND

The practice of blending rubbers is a well-known approach for obtaining an elastomeric material having specific desired properties. Diene-based copolymers have been formulated in a variety of combinations to achieve a wide range of physical properties and chemical properties, in particular chemical resistance. In addition to blending a rubber with another rubber, rubbers have also been blended with thermoplastic resins to obtain a thermoset material or a thermoplastic elastomer. An example of a rubber/thermoplastic resin blend that is a thermoset material after vulcanization is a blend of a nitrile rubber containing a vulcanization system, and up to 50 parts by weight of polyvinyl chloride (PVC) per 100 parts of nitrile rubber. This blend is used for making sponge products, food handling belting, and hose covers, etc. In such a blend, vulcanization is designed to occur after the blend is formed into a final shape. One example of a rubber/thermoplastic blend that is thermoplastic is polyvinyl chloride resin (PVC) modified with up to about 50 parts by weight of a nitrile rubber per 100 parts of PVC, and containing no vulcanization system. This blend is considered to be a thermoplastic elastomer (TPE) even though its rubber component is not vulcanized, and is used for making footwear, automotive dash pad covering, etc. There are other thermoplastic elastomer blends based on a wide variety of polymers. Some of these thermoplastic elastomer blends utilize dynamic vulcanization, i.e., they contain a vulcanizing system that is added to the blend as the components of the blend are being mixed under conditions that promote vulcanization, for example, at a sufficiently high temperature. As a result, the vulcanization of the rubber component of the blend is dynamically promoted, and produces a thermoplastic elastomer composed of vulcanized elastomeric domains within a matrix of a thermoplastic resin.

### SUMMARY

The present invention provides an elastomer composition in which a nitrile rubber modified-thermoplastic copolymer of a nitrile and a carboxylic acid is blended with a diene-based host elastomeric copolymer. The resulting blend has better processability (as measured by mill release, die swell, green strength, etc.) than the host copolymer, as well as improved resistance to attack by certain organic chemicals, and improved permeation resistance to certain organic fumes and fluids. Incorporation of the nitrile rubber modified-thermoplastic copolymer into the elastomer expands the balance of chemical and physical properties obtainable with the host elastomer, and makes possible the compounding of otherwise difficult recipes for the host elastomer.

The composition according to the invention is useful in applications requiring improved resistance to chemicals and improved barrier properties for the diene rubber, without an accompanying deterioration of the good performance at low temperatures which is characteristic of diene rubbers. Examples of applications for which the composition of the invention are particularly suitable are fuel hoses, hydraulic hoses and other hoses for organic fluids; seals; and belts, in particular conveyor belts. Furthermore, compositions according to the invention in which the host elastomer is a nitrile-containing diene rubber, for example acrylonitrile-butadiene rubber (NBR), exhibit good adhesion to fluorinated polymers, such as the thermoplastic resins THV® -500 and THV® -815 (products of Dyneon), and the vulcanizable fluoropolymers VITON® (a product of Dupont) and FLUOREL® (a product of Dyneon), for which satisfactory bonding to rubber was not reliably achieved previously. Therefore, such compositions are particularly suitable for use in articles requiring bonding to fluoropolymers.

### DESCRIPTION

The rubber composition according to the invention comprises: (A) a diene rubber and (B) a nitrile rubber modified-thermoplastic copolymer of an olefinically unsaturated nitrile and an ester of an olefinically unsaturated carboxylic acid, wherein the amount of (B) is in the range from 3 to 100, preferably from 5 to 75, and more preferably from 15 to 50, parts solid weight per 100 parts solid weight of (A).

### Diene rubber

The host elastomer which may be used in the composition according to the invention is a diene rubber selected from:
(1) copolymers of an ethylenically unsaturated nitrile and a conjugated diene;
(2) at least partially hydrogenated copolymers of an ethylenically unsaturated nitrile and a conjugated diene;
(3) carboxylated copolymers of an ethylenically unsaturated nitrile and a conjugated diene;
(4) carboxylated copolymers of an ethylenically unsaturated nitrile and a conjugated diene that are at least partially hydrogenated;
(5) copolymers of a conjugated diene and an aromatic vinyl compound; and
(6) homopolymers of a monomer selected from the group consisting of isoprene and chloroprene.

The proportion of conjugated diene units in the copolymers is not specifically limited, and is generally at least 40% by weight, preferably, in the range of 40-95% by weight, preferably 50-90% by weight, and more preferably 60-85% by weight.

Examples of the conjugated diene constituting the copolymers include 1,3-butadiene, isoprene, 1,3-pentadiene, 2,3-dimethyl-1,3-butadiene, and chloroprene. Preferred are 1,3-butadiene and 2-methyl-1,3-butadiene, with 1,3-butadiene being more preferred.

Examples of the ethylenically unsaturated nitrile include acrylonitrile, methacrylonitrile, alpha-chloro-acrylonitrile, and methoxyacrylonitrile, of which acrylonitrile is preferred. The bound nitrile content of the diene rubber is not particularly limited. However, it is generally within the range of 10 to 60 wt. %, preferably 15 to 45 wt. %.

The carboxylated copolymers (3) and (4) include:
(a) copolymers that have carboxyl-containing monomer units introduced into their polymer chains by copolymerization of the ethylenically unsaturated nitrile and the conjugated diene with an ester of an ethylenically unsaturated monocarboxylic acid; and
(b) polymers that have carboxyl-containing units introduced by addition reaction between (i) an ethylenically unsaturated dicarboxylic acid or anhydride thereof and (ii) a copolymer of an ethylenically unsaturated nitrile and a conjugated diene.

Examples of the ester of an ethylenically unsaturated monocarboxylic acid include alkyl esters, dialkyl esters, alkoxyalkyl esters, fluoroalkyl esters, cyano group-substituted alkyl esters, and hydroxyl group-substituted alkyl esters of ethylenically unsaturated monocarboxylic acids.

Examples of these ethylenically unsaturated carboxylic acids include acrylic acid and methacrylic acid.

Examples of the ethylenically unsaturated dicarboxylic acid include maleic acid, fumaric acid, itaconic acid, citraconic acid, mesaconic acid, glutaconic acid, allylmalonic acid and teraconic acid.

Examples of the ethylenically unsaturated dicarboxylic acid anhydride include maleic anhydride, itaconic anhydride and citraconic anhydride. Of these, ethylenically unsaturated dicarboxylic acid anhydrides having 4 to 10 carbon atoms are preferred, with alpha,beta-unsaturated dicarboxylic acid anhydrides being particularly preferred, maleic anhydride being most preferred.

Examples of the monoalkyl ester of the unsaturated dicarboxylic acid include monomethyl maleate, monoethyl maleate, monopropyl maleate, mono-n-butyl maleate, monoisobutyl maleate, mono-n-pentyl maleate, mono-n-hexyl maleate, mono-2-ethylhexyl maleate, monomethyl fumarate, monoethyl fumarate, monopropyl fumarate, mono-n-butyl fumarate, monoisobutyl fumarate, mono-n-pentyl fumarate, mono-n-hexyl fumarate, mono-2-ethylhexyl fumarate, monomethyl itaconate, monoethyl itaconate, monopropyl itaconate, mono-n-butyl itaconate, monoisobutyl itaconate, mono-n-pentyl itaconate, mono-n-hexyl itaconate, mono-2-ethylhexyl itaconate, monomethyl citraconate, monoethyl citraconate, monopropyl citraconate, mono-n-butyl citraconate, monoisobutyl citraconate, mono-n-pentyl citraconate, mono-n-hexyl citraconate, mono-2-ethylhexyl citraconate, monomethyl mesaconate, monoethyl mesaconate, monopropyl mesaconate, mono-n-butyl mesaconate, monoisobutyl mesaconate, mono-n-pentyl mesaconate, mono-n-hexyl mesaconate, mono-2-ethylhexyl mesaconate, monomethyl glutaconate, monoethyl glutaconate, monopropyl glutaconate, mono-n-butyl glutaconate, monoisobutyl glutaconate, mono-n-pentyl glutaconate, mono-n-hexyl glutaconate, mono-2-ethylhexyl glutaconate, monomethyl allylmalonate, monoethyl allylmalonate, monopropyl allylmalonate, mono-n-butyl allylmalonate, monoisobutyl allylmalonate, mono-n-pentyl allylmalonate, mono-n-hexyl allylmalonate, mono-2-ethynhexyl allylmalonate, monomethyl teraconate, monoethyl teraconate, monopropyl teraconate, mono-n-butyl teraconate, monoisobutyl teraconate, mono-n-pentyl teraconate, mono-n-hexyl teraconate, and mono-2-ethylhexyl teraconate.

Examples of the aromatic vinyl compound include styrene, alpha-methylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, N.N-dimethylaminomethylstyrene, and vinylnaphthalene, of which styrene is preferred.

Examples of the host diene rubber include acrylonitrile-butadiene copolymer rubber (NBR), carboxylated acrylonitrile-butadiene copolymer rubber (XNBR), at least partially hydrogenated acrylonitrile-butadiene copolymer rubber (HNBR), at least partially hydrogenated carboxylated butadiene rubber (XHNBR), and styrene-butadiene copolymer rubber (ABR). Blends of two or more of these copolymers may also be used.

### Nitrile rubber modified-thermoplastic copolymer

The nitrile rubber modified-thermoplastic copolymer may be obtained by copolymerizing
(i) an olefinically unsaturated nitrile having the structure 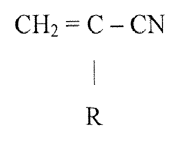 wherein R is selected from the group consisting of hydrogen, a C₁- C₄ alkyl, and a halogen, and
(ii) an ester of an olefinically unsaturated carboxylic acid having the structure 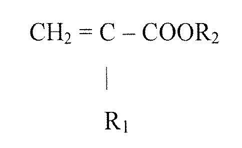
wherein R₁ is selected from the group consisting of hydrogen, a C₁ - C₄ alkyl, and a halogen, and
R₂ is a C₁- C₂ alkyl,
wherein the amount of (i) is at least 70 parts by weight, and the amount of (ii) is up to 30 parts by weight, the combined amount of (i) and (ii) being 100 parts by weight,
in the presence of a nitrile rubber (B') that is a copolymer of (iii) a conjugaged diene monomer selected from the group consisting of butadiene and isoprene, and (iv) an olefinically unsaturated nitrile having the structure 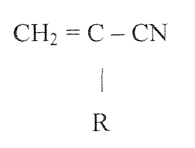 wherein R is as defined above,
the nitrile rubber (B') containing from 50 to 95 parts by weight of polymerized conjugated diene monomer (iii) and from 50 to 5 parts by weight of polymerized olefinically unsaturated nitrile (iv), the combined amount of (iii) and (iv) being 100 parts by weight; and in the case the diene rubber (A) is a nitrile-containing diene rubber, the nitrile rubber (B') may be the same as, or different from, the nitrile-containing diene rubber (A),
the amount of the nitrile rubber (B') being from 1 to 20 parts solid weight to 100 parts of the combined weight of (i) and (ii).

Preferably the nitrile rubber modified-thermoplastic copolymer (B) comprises about 8-10 parts solid weight of nitrile rubber (B') to 100 parts of the combined weight of (i) and (ii). In a preferred embodiment, the nitrile rubber modified-thermoplastic copolymer (B) is produced by graft polymerization of about 73-77 parts by weight of the olefinically unsaturated nitrile (i) and about 32-27 parts by weight of the ester of an olefinically unsaturated carboxylic acid (ii), in the presence of about 8-10 parts by weight the nitrile rubber (B').

An example of this nitrile rubber modified-thermoplastic copolymer is the acrylonitrile-methyl acrylate copolymer suitable for use in contact with food and described in the regulations of the U.S. Food and Drug Administration for "Nitrile rubber modified acrylonitrile-methyl acrylate copolymer", U.S. Code of Federal Regulations, Title 21 (21CFR177.1480). U.S. patent No. 3,426,102 also describes examples of this nitrile rubber modified-thermoplastic copolymer, available from the line of BAREX® resins marketed by BP Chemicals.

### Blending Method

The rubber composition of the invention may be prepared by blending the nitrile rubber modified-thermoplastic copolymer with the host diene elastomer. The individual components may be blended while still in the emulsion polymerized latex stage, with subsequent coagulation and drying; or the nitrile rubber modified-thermoplastic copolymer may be blended mechanically with the host diene elastomer.

In the first method, the latexes are blended to a target composition by calculating the required total solids content of each latex, and then measuring into a common container the volume of each latex needed for obtaining the desired solids content. The latex blend is agitated to assure a homogeneous mixture prior to coagulation, then coagulated using a coagulant suitable for the elastomer (for example, calcium chloride, sodium chloride, aluminum sulfate, or magnesium sulfate). The excess coagulation solution is decanted, leaving a wet solid elastomeric crumb which is then washed and dried to the desired moisture content according to normal production procedures for the host diene elastomer,

In the second blending method, the individual copolymers in dry form (i.e., as "finished polymers") are subject to mechanical blending. The nitrile rubber modified-thermoplastic polymer is added to the host diene elastomer in a ratio calculated to yield the desired composition. The incorporation may be by direct addition to the rubber recipe *(in situ),* together with fillers, plasticizers and other additives, or by making a concentrated masterbatch of the nitrile rubber modified-thermoplastic polymer with the desired host diene elastomer, followed by subsequent dilution in the final recipe. The proportion of host diene elastomer to nitrile rubber modified-thermoplastic polymer in a masterbatch is not particularly limited. However, a ratio of 50/50 by weight usually has been found to be suitable for a masterbatch, in particular because such a masterbatch has a sufficiently high content of the thermoplastic component (i.e., the nitrile rubber modified-thermoplastic polymer) that it can be handled easily in subsequent mixing stages, and can be cut into pieces that are easily fed into the mixer. With a 50/50 masterbatch, the calculation of the vulcanizable nitrile content in subsequent mixing steps is also conveniently easy.

Incorporation of the nitrile rubber modified-thermoplastic polymer into the diene elastomer, or incorporation of the masterbatch into the diene elastomer, may be carried out in an open two-roll mixing mill, or in an internal 2-rotor mixer or extruder mixer suited for the task. Incorporation is best accomplished with sufficient shear and added heat, if needed, to soften the nitrile rubber modified-thermoplastic polymer to the point where its viscosity is close to that of the host diene elastomer towards the end of the mix cycle. Preferably the batch is discharged after its temperature reaches a value in the range of 165 to 175°C. Discharging at a temperature below this range may leave undispersed nitrile rubber modified-thermoplastic polymer in the composition. Allowing the temperature to rise above this range may require additional polymer stabilization to prevent gel formation of the host diene elastomer. One method for preventing such thermal gel formation is to add a small amount, for example in the range of 0.05 - 0.10 weight percent based on the total weight of the host diene elastomer, of a strong hydroquinone, such as 2,5(Di-tertiary) amylhydroquinone.

The rubber composition according to the invention may be formulated to include additives suitably selected by one of ordinary skill in the art, which may include but are not limited to curing aids, activators, retarders, accelerators, processing additives, plasticizers, antioxidants, antiozonants, fillers, etc.

### Vulcanization

The composition according to the invention may be vulcanized using known vulcanization systems typical for diene elastomers, such as those based on sulfur or peroxides. Vulcanization systems based on sulfur activated with thiurams and/or thiazoles, or based on organic peroxides are commonly used.

The following examples further illustrate aspects of the invention but do not limit the invention. Unless otherwise indicated, all parts, percentages, ratios, etc., in the examples and in the rest of the specification are in terms of weight.

### EXAMPLES

Blends of NBR rubber (45% bound acrylonitrile/55% butadiene) in latex form (23% total solids) and nitrile rubber modified-methyl acrylate thermoplastic copolymer (inflection point Tg of 84.3°C) in latex form (30 % total solids) were prepared according to the formulations shown in Table 1, using a 50/50 masterbatch. As a precaution against possible gelling due to thermal degradation of the nitrile rubber during mixing under conditions of high temperature and high shear, the masterbatch was made by adding 0.010 parts of 2,5(Di-tertiary) amylhydroquinone (or DTAHQ) to 100.00 parts of nitrile rubber and 100.00 parts of nitrile rubber modified-methyl acrylate thermoplastic copolymer. (The small increase in the amount of DTAHQ due to the increase in the amount of nitrile rubber modified-thermoplastic copolymer in a blend had no effect on the processing or the end-use performance of the formulations.)

The nitrile rubber modified-thermoplastic copolymer and the anti-gelling agent were incorporated into the nitrile rubber using a Technolab® BR1600 laboratory Banbury mixer made by Farrell. Mixer volume was set at 1380cm³, rotor speed at 75 RPM, and the mixer was preheated to 70°C, using a Deltatherm® heater/chiller made by Delta T Systems. The ingredients were allowed to mix until a temperature of 170°C was reached, and the mixture was discharged and passed through a two-roll mill to be formed into a sheet of a thickness of about 6-7mm. The finished masterbatch was allowed to cool before weighing and incorporating into the recipes.

The masterbatch incorporation into the formulations was done in two additional steps. In the first step, known as the "mix"step, the masterbatch was added to all the other formulation ingredients, i.e., the remainder of the nitrile rubber, along with the carbon filler, plasticizer, zinc oxide and antioxidants, except for the vulcanization ingredients, to make a non-productive mix (so called because it contains no curative agents.) As with the masterbatch, the temperature was brought to 170°C prior to discharging. The mixer speed was kept at 75 RPM, and the starting mixer temperature was 70°C. This non-productive mix was discharged, and passed through a two-roll mill and allowed to cool, in preparation for the final step, known as a "cure pass", in which the vulcanization package was added. In this final cure pass, one-half of the non-productive mix was added, followed by the vulcanization agents, and then the remainder of the non-productive mix. The mixer settings were 50 for the rotor speed, 30°C for the mixer temperature, and 100°C for the discharge temperature. The final mix was passed through a two-roll mill for cooling and preparation for further processing, such as calendering, extruding or molding.

Incorporation of the thermoplastic copolymer into the nitrile rubber was found to be equally successful by adding the pellets of thermoplastic copolymer directly into the nitrile rubber, reinforcement filler, plasticizer and other additives for an *in situ* mix. The blend could be mixed under the same conditions as when a masterbatch was used, except that preheating of the mixer was not required. The blend of nitrile rubber, nitrile rubber modified-thermoplastic copolymer, and remaining ingredients generated sufficient shear upon blending to raise the temperature to the required discharge temperature of 170 °C without the need to preheat the mixer to shorten the mixing time required to reach that temperature. There were no noticeable differences in properties between the products prepared with a masterbatch, and those prepared by "neat" addition of the nitrile rubber modified-methyl acrylate copolymer to the nitrile rubber.

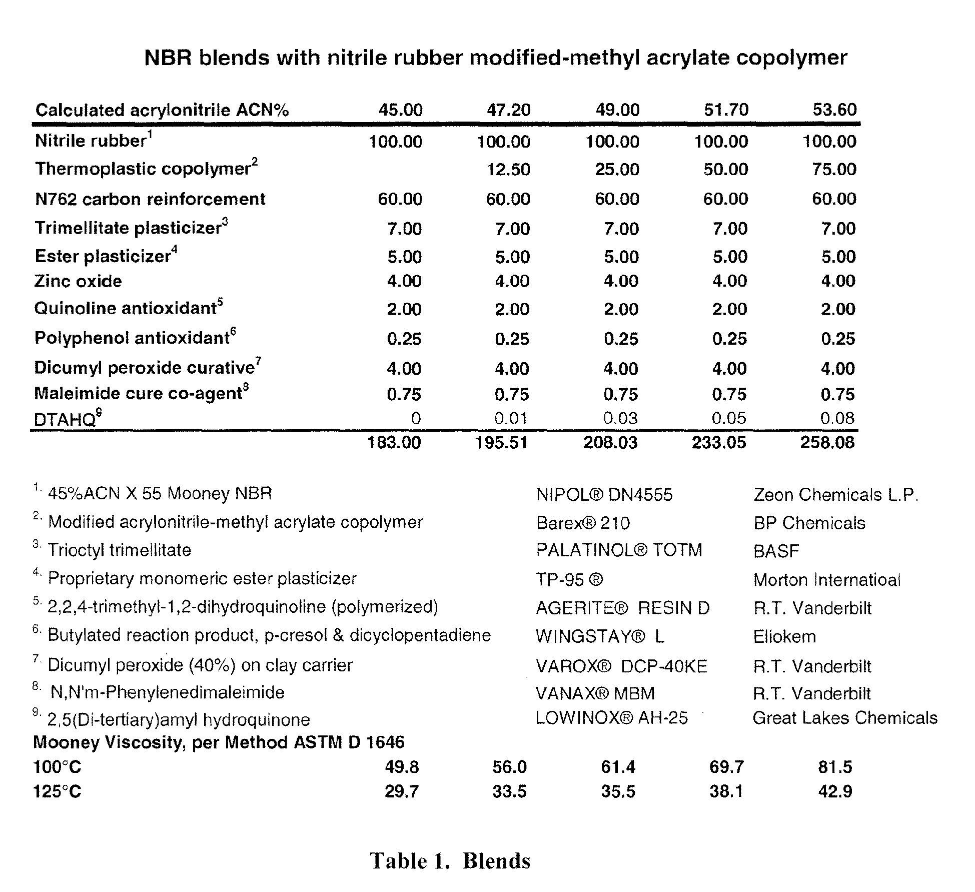

In the above formulations, for the sake of simplicity the amounts of the curative agents were not changed proportionably with the small increase in butadiene content. Table 1 also shows the Mooney viscosity for each formulation, measured at 100°C and at 125°C, which data indicates that temperature has a significant softening effect on the formulations.

The low temperature performance of the formulations was evaluated. The tests are identified and the results shown in Table 2.

**Table 2. Low temperature properties**

| Calculated ACN% | 45.00 | 47.20 | 49.00 | 51.70 | 53.60 |
|---|---|---|---|---|---|
| Low Temp Brittleness, Method: ASTM D 2137 | | | | | |
| Pass, °C | -18 | -16 | -14 | -14 | -12 |

| Gehman Torsional Stiffness, Method: ASTM D 1053 | | | | | |
|---|---|---|---|---|---|
| T2, (°C) | -8 | -6 | -5 | -6 | -6 |
| T5, (°C) | -14 | -12 | -12 | -13 | -13 |
| T10, (°C) | -15 | -14 | -15 | -16 | -16 |
| T100, (°C) | -21 | -20 | -20 | -23 | -27 |

| Low Temp Retraction, Method: ASTM D 1329 | | | | | |
|---|---|---|---|---|---|
| TR10, (°C) | -17 | -16 | -16 | -14 | -14 |

The above data shows that incremental addition of the nitrile rubber modified-methyl acrylate thermoplastic copolymer (Tg of 84.3°C) to the NBR rubber (45% bound acrylonitrile, Tg of-11.7°C) does not significantly affect those low temperature properties of the blend, such as the Gehman torsional stiffness and the low temperature retraction(TR-10), that are usually governed by the component having a higher Tg. This result is contrary to the results usually obtained when an acrylonitrile-based copolymer having a high Tg is blended with an acrylonitrile-based copolymer having a low Tg. (Glass transition (Tg) measurements were made using standard method ASTM D 3418, modified as follows: a 10°C/minute temperature change was used, and the inflection point was read, rather than the specified mid point.)

The chemical resistance to fuel and the permeability to fuel of the above formulations were tested with ASTM Reference Fuel C according to the methods indicated in Table 3.

**Table 3. Fuel resistance and fuel vapor permeation**

| | | | | | |
|---|---|---|---|---|---|
| Calculated acrylonitrile ACN % | 45.00 | 47.20 | 49.00 | 51.70 | 53.60 |
| | 6 | 7 | 8 | 9 | 10 |
| Properties, After 72 Hours, ASTM Reference Fuel C @ 23°C, per ASTM D 471 | | | | | |
| Hardness A, (pts)^{g} | 49 | 52 | 58 | 66 | 75 |
| Hard Change A, (pts) | -20 | -21 | -21 | -17 | -15 |
| Tensile, (psi) ¹⁰ | 1628 | 1673 | 1584 | 1715 | 1895 |
| Tensile Change, (%) | -48 | -42 | -41 | -35 | -27 |
| Elongation, (%)¹⁰ | 241 | 240 | 204 | 177 | 152 |
| Elongation Change, (%) | -39 | -33 | -30 | -16 | -8 |
| Volume Change, (%)¹¹ | 36.6 | 35.8 | 33.9 | 31.8 | 28.9 |
| Weight Change, (%)¹¹ | 24.5 | 24.4 | 23.4 | 22.2 | 20.2 |
| Permeability, ASTM Reference Fuel C, 1008h @ 40°C ¹² | | | | | |
| g.mm/m2.day | 229 | 211 | 198 | 164 | 149 |

| | | | | | |
|---|---|---|---|---|---|
| ⁹Method: ASTM D 2240 | | | | | |
| ¹⁰Method: ASTM D 412 | | | | | |
| ¹¹Method: ASTM D 471 | | | | | |
| ¹²Method: Thwing-Albert mechanical seal vapometer | | | | | |
| Thwing-Albert Instrument Company | | | | | |
| 10960 Dutton Road | | | | | |
| Philadelphia, PA 19154 | | | | | |

The above data shows that incremental addition of the nitrile rubber modified-thermoplastic polymer to the nitrile rubber improves the fuel resistance of the composition, as measured by reduced changes in hardness, tensile change, elongation change, and volume change. The resistance to permeation of fuel vapor is also improved.

Other embodiments of the present invention will be apparent to those skilled in the art from consideration of the specification and practice of the invention disclosed herein. It is intended that the specification and examples be considered as illustrative only, with the true scope and spirit of the invention being indicated by the following claims.

## Claims

1. A vulcanizable rubber composition comprising:
(A) a diene-containing rubber which is at least one member selected from the group consisting of:
(1) copolymers of an ethylenically unsaturated nitrile and a conjugated diene;
(2) at least partially hydrogenated copolymers of an ethylenically unsaturated nitrile and a conjugated diene;
(3) carboxylated copolymers of an ethylenically unsaturated nitrile and a conjugated diene;
(4) carboxylated copolymers of an ethylenically unsaturated nitrile and a conjugated diene that are at least partially hydrogenated;
(5) copolymers of a conjugated diene and an aromatic vinyl compound; and
(6) homopolymers of a monomer selected from the group consisting of isoprene and chloroprene;
(B) a nitrile rubber modified-thermoplastic copolymer obtained by copolymerizing
(i) an olefinically unsaturated nitrile having the structure 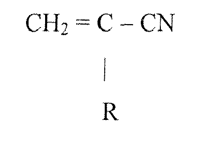 wherein R is selected from the group consisting of hydrogen, a C₁ - C₄ alkyl, and a halogen, and
(ii) an ester of an olefinically unsaturated carboxylic acid having the structure 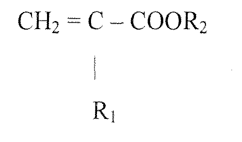
wherein R₁ is selected from the group consisting of hydrogen, a C₁- C₄ alkyl, and a halogen, and
R₂ is a C₁-C₂ alkyl,
wherein the amount of (i) is at least 70 parts by weight, and the amount of (ii) is up to 30 parts by weight, the combined amount of (i) and (ii) being 100 parts by weight,
in the presence of a nitrile rubber (B') which is a copolymer of (iii) a conjugaged diene monomer selected from the group consisting of butadiene and isoprene, and (iv) an olefinically unsaturated nitrile having the structure 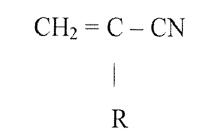 wherein R is as defined above,
the nitrile rubber (B') containing from 50 to 95 parts by weight of polymerized conjugated diene monomer (iii) and from 50 to 5 parts by weight of polymerized olefinically unsaturated nitrile (iv), the combined amount of (iii) and (iv) being 100 parts by weight,
the nitrile rubber (B') being the same as, or different from, the rubber (A),
the amount of the nitrile rubber (B') being from 1 to 20 parts solid weight to 100 parts of the combined weight of (i) and (ii), and
the amount of (B) being in the range from 3 to 100 parts solid weight per 100 parts solid weight of (A); and
(C) a vulcanizing system for the diene-containing rubber (A).

2. A vulcanizable rubber composition as in claim 1, wherein the amount of (B) is in the range from 5 to 75 parts solid weight per 100 parts solid weight of (A).

3. A vulcanizable rubber composition as in claim 1 or 2, wherein the amount of (B) is in the range from 15 to 50 parts solid weight per 100 parts solid weight of (A).

4. A vulcanizable rubber composition as in one of claims 1 to 3, wherein the nitrile rubber modified-thermoplastic copolymer (B) comprises about 8-10 parts solid weight of nitrile rubber (B') to 100 parts of the combined weight of (i) and (ii).

5. A vulcanizable rubber composition as in any one of claims 1 to 4, wherein the nitrile rubber modified-thermoplastic copolymer nitrile (B) is produced by graft polymerization of about 73-77 parts by weight of acrylonitrile and about 32-27 parts by weight of methyl acrylate in the presence of about 8-10 parts by weight nitrile rubber (B').

6. A vulcanizable rubber composition as in any one of claims 1 to 5, wherein the diene-containing rubber (A) is a copolymer of an ethylenically unsaturated nitrile.

7. A vulcanizable rubber composition as in any one of claims 1 to 6, wherein the diene-containing rubber (A) is at least one member selected from the group consisting of acrylonitrile-butadiene copolymer rubber, carboxylated acrylonitrile-butadiene copolymer rubber, at least partially hydrogenated acrylonitrile-butadiene copolymer rubber, at least partially hydrogenated carboxylated butadiene rubber, and styrene-butadiene copolymer rubber (ABR).

8. A vulcanizable rubber composition as in any one of claims 1 to 7, wherein the copolymers (1), (2), (3), (4) and (5) contain at least 40% by weight of conjugated diene units.

9. A vulcanizable rubber composition as in any one of claims 1 to 8, wherein the copolymers (1), (2), (3), (4) and (5) contain 50-90% by weight of conjugated diene units.

10. A vulcanizable rubber composition as in any one of claims 1 to 9, wherein the copolymers (1), (2), (3), (4) and (5) contain 60-85% by weight of conjugated diene units.

11. A vulcanizable rubber composition as in any one of claims 1 to 10, wherein the conjugated diene is selected from the group consisting of 1,3-butadiene, isoprene, 1,3-pentadiene, 2,3-dimethyl-1,3-butadiene, and chloroprene.

12. A vulcanizable rubber composition as in any one of claims 1 to 11, wherein the diene-containing rubber (A) has a bound nitrile content in the range of 10 to 60 wt. %.

13. A vulcanizable rubber composition as in any one of claims 1 to 12, wherein the diene-containing rubber (A) has a bound nitrile content in the range of 15 to 45 wt. %.

14. A vulcanizable rubber composition as in any one of claims 1 to 13, wherein the carboxylated copolymers are selected from the group consisting of:
(a) copolymers that have carboxyl-containing monomer units introduced into their polymer chains by copolymerization of the ethylenically unsaturated nitrile and the conjugated diene with an ester of an ethylenically unsaturated monocarboxylic acid; and
(b) polymers that have carboxyl-containing units introduced by addition reaction between (i) an ethylenically unsaturated dicarboxylic acid or anhydride thereof and (ii) a copolymer of an ethylenically unsaturated nitrile and a conjugated diene.

15. A vulcanizable rubber composition as in any one of claims 1 to 14, which comprises an anti-gelling agent for the diene-containing rubber (A).

16. An article comprising at least one portion made of a vulcanizable rubber composition as in any one of claims 1 to 15.

17. An article as in claim 16, which is a hose.

18. An article as in claim 16, which is a belt.

19. An article as in claim 16, 17 or 18, wherein the diene-containing rubber (A) is a copolymer of an ethylenically unsaturated nitrile.

20. An article as in any one of claims 15 to 19, which further comprises a portion made of a fluoropolymer which is bonded to the portion made of the vulcanizable rubber composition.
